# EUROPEAN PATENT APPLICATION

(11) **EP 1 168 163 A1**
(43) Date of publication of application: **02.01.2002**
(21) Application number: 00410063.2
(22) Date of filing: 19.06.2000
(51) Int. Cl.: G06F 9/445

(54) **Process for installing a software package in a client computer**

(71) Applicant: Hewlett-Packard Company, A Delaware Corporation, Palo Alto, CA 94304 (US)
(72) Inventor: Richard, Bruno, 38920 Crolles (FR); Flaven, Denis, 38830 Saint-Pierre d'Allevard (FR)
(74) Representative: Lloyd, Richard Graham

(57) **Abstract**

A process for controlling the remote installation of a software package within a remote PC client existing on a LAN. An executable file is arranged for the purpose of controlling the local setup procedure within the remote PC client. The executable file is a windows NT service and is installed in accordance with rules of the NT Service Control Manager. The executable file is further associated with a description file (package.ini) which is also stored on a shared resource, and an option on the command line of the executable file refers to that description package. Once the executable file has been installed as a service, the NT SCM can be used for starting it and, therefore, for triggering the remote installation of the software package within the PC client using the information found in the description file. The process can also be used for remotely triggering an executable file which is arranged as a NT service, and installed by the NT SCM.

## Description

### Technical field of the invention

The invention relates to computer systems and telecommunications, and more particularly to a process for automatically installing a software package on a client computer which operates under a WINDOWS NT ™ or similar environment.

### Background art

Computer systems and more generally Information Handling Systems (I.H.S) constitute more and more complex communication networks, and this is particularly relevant in the case of corporate environments. In a corporate environment, numerous computers are connected to a Local Area Network (LAN), or to an Intranet network for the purpose of sharing the different resources between the computers.

In that respect, the place which is taken by the WINDOWS NT™ operating system marketed by Microsoft Corp., appears quite important. A Corporation or a private organisation can arrange an effective network and share the different resources between a wide range of computers or clients. Generally speaking an Information Technology (IT) administrator receives the task of handling and managing the different computers which communicate through the network, and the software packages therein included so as to ensure that those fit the user's needs. Particularly, the IT administrator has the responsibility of installing the different software packages in the different computers on the LAN.

The IT administrator who wishes to automate the installation procedure may use different solutions in accordance with the particular operating system which is used.

For the case of a client computer which operates under the UNIX operating system, the IT administrator may take advantage from the pre-existing TELNET feature present in that OS. That facility allows the remote control of the PC client. As known in the art, the TELNET is based on human interface over a communication protocol, allowing remote operation of a machine in a console mode, as if the user was operating the machine locally.

For systems which operate under the WINDOWS NT™ OS, the IT Administrator is faced with a major difficulty since this operating system is designed with the assumption that, contrary to the UNIX approach evoked above, a user is behind the computer and is controlling it. There is not given any direct possibility to remotely take the control of the computer client, for instance, for the purpose of launching an installation procedure. The IT Administrator is then compelled to move to the physical place where the PC client is situated, for the purpose of installing the software package, for example by controlling from there the downloading of the installation package. This consumes a great deal of time and is clearly not satisfactory in this type of operating systems, designed to be controlled by a local operator. The IT administrator may wish to have a full control over the installation procedures from his own console or computer, wherever the remote physical situation of the PC client. In some situations, he may take advantage of a pre-existing agent for the purpose of controlling the installation procedure with files stored on a remote server but that agent also needs to be installed, what still requires a manual and local setup procedure in the computer client.

Another solution is based on the use of the *Login Script facility* which is provided by the *Primary Domain Controller* (PDC) of the NT domain. When the user is logging on to his Domain account, a script is being triggered from the PDC. That solution however entails three main drawbacks: A first drawback comes from the fact that administrative access rights to the PDC are required, what could appear haphazard in some situations. Further, the automatic triggering of the logon script by all the users who are logging at the same time might have some bad consequences and result in a overhead of the system resources. In any case, the IT administrator is never aware of the precise instant where the installation procedure has been executed since, clearly, he may never knows when every user is actually logging on and, for those who have not, the problem still remains.

It therefore appears that the existing solutions for computer clients, based on the WINDOWS NT™ or WINDOWS 2000™ approach are not completely satisfactory. There is still a need for a direct and full control over the PC client machines, independently of the user and the existence of a pre-existing agent within the PC clients. The IT administrator should be allowed a direct and full control over a remote PC client, for the purpose of launching an installation procedure of a software package present on a shared resource.

More generally, the IT administrator should be given the possibility to easily launch an executable file within a remote PC client which is part of a NT Network domain.

### Summary of the invention

It is an object of the present invention to achieve the remote installation of a software package in a client computer which is connected to a LAN or an INTRANET and which operates under Windows NT™ or Windows 2000™ type operating system not designed to offer any remote control of the computer.

It is another object of the present invention to achieve the remote execution in a computer client of a software executable program which is stored in a shared resource or a server.

These objects are achieved by means of the process which is defined in the independent claims. Basically an executable file *(pushservice.exe)* is stored on a server as a shared resource and is used for controlling a local setup procedure of a software application. The executable file is being installed as a low level service which is generally available for background local tasks, such as drivers, anti-virus programs, IP protocols, TCP/IP and harddisk compression mechanisms. The process deviates the normal use of those low level services for the purpose of executing a remote executable file located on a server, and shared. Once it has been installed, as a service, the executable filed can be started on the computer without being present on the hard disk of the latter.

Typically, for the case of Windows ™ operating system, the executable file is being installed as a NT service under the control of the NT service control manager (SCM) and in accordance with the description contained within a description file (*package.ini*) which may also be stored on a server, as a shared resource. For that purpose, the executable file *(pushservice.exe)* receives the particular format of a NT service.

Once it has been installed as a service, the executable file (*pushservice.exe*) becomes available to the remote PC client and may control the setup procedure in accordance with the description contained within the description file.

The IT manager is therefore given a very simple and effective way for controlling the setup procedure of a software package, stored on a server, and which are installed within a remote client computer, elsewhere in the LAN. The remote setup procedure takes advantage of the LAN existing in the network, and the administrative rights which apply to the considered machines where the software package is to be installed. The process can be immediately applied for triggering the setup of mandatory files on a given machine, such as virus signatures, Operating Systems service packs or patches...

In one embodiment, the description file (*package.ini*) contains a list of the installation files required for a local setup procedure plus an additional line defining the command which is to be entered for executing an unattended setup procedure of said software application

Preferably, the installation of the NT service is followed by the activation of a Wake-on-LAN function existing in the PC client so that the IT administrator may, at any time, control the setup procedures in the PC clients..

The comfort in use of the setup procedure can be substantially enhanced by means of a Graphical User Interface (GUI) which provides the IT administrator with a full and comprehensive description of the different PC clients composing the NT domain, as well as the different software package applications which are already installed. In particular, a drag-and-drop mechanism is used for launching the remote setup procedure of the invention.

In addition, a process is provided which can be used for triggering the execution of an executable file, stored on a server or on shared resources within a NT domain. The execution can be automatically triggered by means of the formatting of the executable file as a service, with an entry point referring to a service entry, and by correspondingly installing it by the NT Service Control Manager.

The invention also provides a new arrangement of servers for a NT domain which can be used for storing installation package which can be easily installed in different remote PC clients under the control of the IT administrator. For that purpose, the new server stores at least one software installation package, and a description file (package.ini) which is associated to that application. In addition, an executable file is being stored and is installed as a NT service for the purpose of controlling the remote setup procedure of the application within the remote PC client.

### Description of the drawings

An embodiment of the invention will now be described, by way of example only, with reference to the accompanying drawings, wherein:
Figure 1 illustrates the basic architecture of a network based on a LAN or an Intranet, and comprising at least one PC client, a server and an IT administrator console.
Figure 2 is a flow chart illustrating the process for executing the remote installation of a software package within PC client 3.
Figure 3 is a flow chart of the process executed by *pushservice.exe* when started as a NT service by the NT Service Control Manager.

### Description of the preferred embodiment of the invention

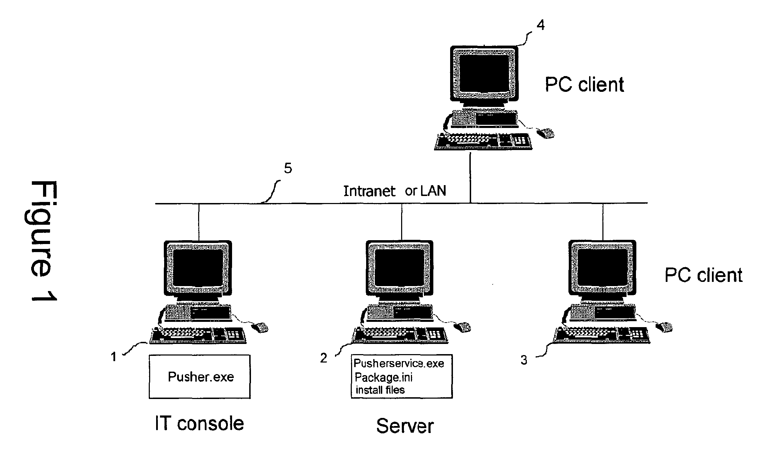

With respect to figure 1 there is represented an LAN or Intranet network 5 which defines a NT domain, which control may be given to an IT administrator operating from a console 1 or computer 2. A server 2 may be used as shared resources for storing software installation packages which can be distributed to the different PC clients comprised within the NT domain. Figure 1 represents two PC clients 3 and 4 which are operated under the WINDOWS NT™ or WINDOWS 2000™. From his console 1, the IT administrator manages the network and particularly controls the installation procedures of software packages stored on server 2 within the PC clients 3 and 4. This will be achieved remotely as will be explained hereinafter. The IT administrator is particularly aware of the administrative account of PC clients where the software packages need to be installed, and the precise particular administrative account name and password assigned to those PC clients. Note that in the specific case of PCs operating in an NT domain infrastructure, by default the fact of being a *domain administrator* automatically gives administrative rights over all the PCs in the domain. In the scope of this invention this means that if the IT Administrator is logged on to the domain with his domain administrator account, he does not require any additional knowledge about the remote machines accounts, and can use his account to administer these machines.

Server 2 includes at least one software package which may be used for installing a given application in PC client 3, for instance, under the control of the IT administrator. Typically, one software package includes all the files which are normally required for a local setup procedure and which correspond to the application being considered. Those installation files clearly depends upon the type and the complexity of the particular application for which an installation is required. Such installation files, including the Dynamic Link Libraries (DLL) and all the subsequent files which are to be copied on the hard disk drive of PC client 3, for instance, are well known from the skilled man and will not, for that reason, be developed with more details. Typically, it is sufficient to observe that those files include all the files which are normally involved in a local setup procedure and that the particular executable file - the *setup.exe -* which causes the launching of the installation procedure, has to support an unattended mode, which is that which is being executed when the user types the "-s" switch on the command line (unattended or silent setup).

In addition to the installation files required for a standard local setup procedure, the software package located on server 2 further includes an additional description file, hereinafter referred to as *package.ini* file. *Package.ini* file may take the form of a text file and contains the description of the installation files which are involved in the setup procedure. It particularly includes the precise list of the installation files required for a local setup procedure, plus an additional line carrying the command which is required for starting the local setup procedure.

Considering the example of the Microsoft Office ™ software package which is marketed by Microsoft ™ Corp., server 2 is arranged to store the standard Microsoft installation files. In addition server 2 includes a *package.ini* description file which defines the list of those files and further comprises an additional line to run the silent setup procedure, i.e. the following line: *"setup.exe ―s" .*

There will be now described the process which is executed under the control of the IT administrator, from console 1, for launching a remote installation into PC client 3 of a software package present on server 2. In one embodiment, the console 1 includes a particular so-called *pusher.exe* executable file, as shown in figure 1.

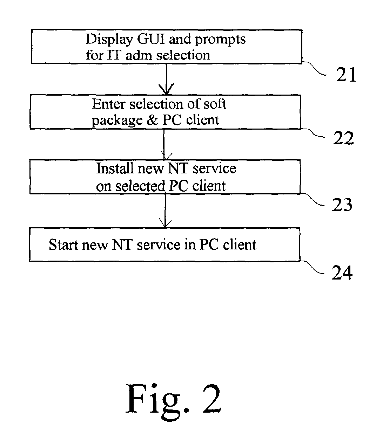

The process which is executed by *pusher.exe* executable file is depicted in figure 2. The process starts with the display of a Graphical User Interface (GUI) on console 1 for the purpose of providing a wide and comprehensive description of the network, of the different PC clients comprised within the network, the list of the different software packages which are present and available on server 2 and the distribution of those between the different PC clients.

When the Graphical User Interface is being started, the IT administrator is being prompted in step 21 to select one software package available on server 2, for the purpose of associating it to one particular PC client, e.g. PC client 3. In one particular embodiment, the GUI includes a "drag-and-drop" mechanism which permits a direct and very simple association between the considered software package and PC client 3. By dragging an icon corresponding to one software, and dropping it onto the visual icon representative of one PC client, a particular selection of a software package is associated to one PC client, e.g. PC client 3, and this selection is entered into step 22.

In step 23, the selection of one particular software application, and its association to one particular PC client, causes the pusher.exe to install a new NT service on PC client 3, hereinafter referred to as *pushservice.exe.* This is achieved by means of the use of the NT Service Control Manager (SCM) of PC client 3, thanks to the administrative rights given to IT administrator on that particular machine. As known by the skilled man, Microsoft NT ™ and Microsoft 2000 ™ supports an application type known as a service which takes the form of a .exe or .dll , for instance. A *service application* conforms to the interface rules of the SCM. It can be started automatically at system boot, or by a user through the Service Control panel applet, or by an application which uses the service functions included in the Microsoft ™ WIN32 ™ Application Programming Interface (API). The process which is described below takes advantage of the NT service which is generally used for *local* files, drivers, anti-virus programs, Internet Protocol and TCP/IP drivers, and hard disk drive compression mechanisms. The process which is described herein after however deviates the normal use of the standard NT service for the purpose of executing a *remote* executable file located on server 2, and shared. Once it has been registered and installed as a service, the executable file can be started on a PC client without being present on the hard disk drive of the latter. It should be noticed that the particular executable file - herein referred to as the *pushservice.exe* - is compiled in accordance with the prescriptions applying to the services, and which are defined in the Microsoft specifications. Particularly, the entry point of that executable file is not referring to WINMAIN as for the usual standard executable files, but refers to a service entry which WINDOWS NT decodes as such. The general rules of the development conventions which are applicable to the services executable files are available in the specifications marketed by Microsoft, and particularly in the Microsoft Software Developer's Network reference book.

As explained above, the registration of executable file *pushservice.exe,* which has been preliminary compiled under the NT service file, is then registered by the NT Service Control Manager as a new NT service, in step 23. It should be noticed that the installation of the NT service for the *pushservice.exe* file requires that the PC client 3 or 4 are switched on. In one particular embodiment, the process takes advantage of a Wake-on-LAN function which is present within PC client 3, and which permits the actual installation of the service.

The NT service which is installed for the purpose of the remote software package installation receives the following reference:

### \\server\share\pushservice.exe

A reference to the package software existing on the hard disk of the shared server 2 is used as an option of the command line, e.g.

### \\server\share\package.ini

It therefore appears that, as shown in figure 1, server 2 comprises the standard installation files for a local setup, the additional installation description file *package.ini* as well as the special *pushservice.exe* file for supporting the newly registered NT service.

When it is installed, the new NT service can be started by the IT administrator in accordance with the usual NT Service Control Manager procedures, in step 24. That causes the instantiation of the service into the memory of the PC client and starts its execution. The new NT service becomes available on the PC client 3, when the latter is started. This achieves the remote execution within PC client 3, under control of console 1, of an executable file which is stored on a server 2 and which has been compiled as a service. As it will be described now with details, the process takes advantage of the NT service control manager for the purpose of an automatic installation procedure through a network

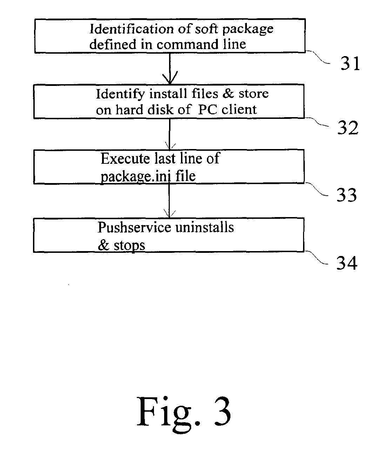

Figure 3 particularly shows the process which is executed by the *pushservice.exe* service in response to the loading into the memory of the NT service under the control the IT administrator.

The execution of the pusherservice.exe starts with step 31 which causes the identification of the software package which is to be installed. This is achieved by means of the extraction of the particular command line which has been associated to the new service by the NT Service Control Manager, as explained above. The process particularly uses the option of the command line defined above, and which contains a reference to the *package.ini* description file stored on the server 2.

In step 32, the pusherservice.exe opens the *package.ini* description file and identifies the different files which are to be installed on the PC client being considered, e.g. PC client 3. The process downloads them from the server 2 and stores a copy of those files in a predetermined directory on the hard disk drive of the PC client. As known by the skilled man this can be achieved by means of a path relative to the pushservice.exe path. The storing process of the installation files on the local hard disk of PC client appears most useful and safe. However, it should be possible, in another embodiment, to directly use the original version of the installation files existing on remote server 2 for the purpose of initiating the setup procedure in PC client 3.

When all the installation files have been copied onto the hard disk drive of the local PC client 3, the process executed by *pushservice.exe* causes the execution of the command which is defined at the last line of the *package.ini* description file in step 33. This causes a unattended setup procedure of the particular application which is concerned.

In step 34, the *pushservice.exe,* which has received the format of a NT service as explained above, un-installs itself and stops, contrary to the usual mechanism of the standard executable files.

It has been described how the IT administrator may take the control, from his own console 1, of a setup procedure on a remote PC client 3. It should be noticed that, while the process has been described in reference to the IT administrator, it can also be useful for any users who receive the possibility of launching an executable file, stored on a remote server, and which are to be executed on a remote PC client. In that case, the *pusher.exe* program may alternatively prompts the user to enter the particularly context for which the executable file is to be executed in the remote PC client. Once the user has entered a given context, the *pusher.exe* program then request the id and the password for giving access to that context. In that embodiment, the NT Service Control Manager is used for allowing different users to have a remote control on the execution of file in different PC clients, in accordance with the administration rights which are assigned to the different users. The process can then be used by the IT administrator, who has extensive rights on the Domain, but also by the other users having different, and generally lower, access rights.

As mentioned above, the software package, comprising the installation files for a local setup and the additional mechanism description *package.ini* file are all located on server 2. It should be noticed, however, that this is only an example of embodiment, and that the software package may be located in different locations or shared resources within the NT domain. In particularly, the installation packages may also be loaded into the IT administrator console 1.

## Claims

1. Process for performing a remote setup procedure of a software application on a remote client which operates under an operating system which does not support a remote installation facility,
**characterised in that** it involves the steps of:
- installing (23) an executable file for controlling a local setup procedure under the form of a low level service which is available in the operating system for local background tasks and routines, said executable file being associated with the description contained within a description file (*package.ini*) present on a shared resource;
- starting (24) said executable file so as it becomes available to said remote client as a service and permits the automatic launching of a local setup procedure in accordance with the contents of said description file (*package.ini*).

2. Process for performing a remote setup procedure of a software application on a remote client which operates under Windows NT on a Local Area Network (LAN),
**characterised in that** it involves the steps of:
- installing (23) an executable file for controlling a local setup procedure under the control of the NT Service Control Manager (SCM) and in accordance with the description contained within a description file (*package.ini*) present on a shared resources; said executable file *(pushservice.exe)* receiving the format of a NT service;
- starting (24) said executable file so as it becomes available to said PC client as a service and permits the launching of a local setup procedure within said PC client in accordance with the contents of said description file (*package.ini*).

3. Process according to claim 2 **characterised in that** said executable file has an entry point which is a service entry and which is further registered by said NT Service Control Manager with an option of the command line which refers to said description file (*package.ini*).

4. Process according to claim 3 **characterised in that** said description file (*package.ini*) contains a list of the installation files required for a local setup procedure plus an additional line defining the command which is to be entered for executing an unattended setup procedure of said software application.

5. Process according to claim 1 comprising the display of a Graphical User Interface (GUI) for providing to the user a list of software applications which are currently available on the NT domain as well as a list of the computer clients therein included, and further including a drag-and-drop mechanism for the purpose of launching an additional remote setup procedure in a new PC client.

6. Process according to claim1 **characterised in that** it involves the step of:
- prompting the user to enter a particular context where said executable file (*pushservice.exe*) is to be executed;
- requesting the id and password corresponding to that context;
- verifying said id and password being entered by the user and, in accordance with the verification, installing said executable file as a NT service.

7. Process according to claim 1 **characterised in that** the installation of the NT service is followed by the activation of a Wake-on-LAN function in said PC client for the purpose of starting said service.

8. Process executed in a IT administrator console (1) for the purpose of controlling the remote installation of software application packages into at least one PC client, said process involving the steps of:
- installing an executable file (*pushservice.exe*) as a NT service under the control of a NT Service Control Manager (SCM), said executable file controlling the local setup procedure of a software application in unattended mode in accordance with a description defined by a description file (*package.ini*) present on shared resources;
- starting said executable file as a NT service for the purpose of launching the setup procedure within said PC client.

9. Process for controlling the execution on a remote PC client of an executable file existing on shared resources in a NT domain, **characterised in that** it involves the steps of:
- installing said executable file as an NT service under the control of the NT Service Control Manager (SCM);
- starting said installed service for the purpose of automatically triggering the execution of said executable file.

10. Server for a NT domain comprising a LAN or an Intranet network, **characterised in that** it includes:
- at least one software installation package existing as shared resources within said NT domain, each of said at least one package comprising a set of installation files required for a local setup procedure within said at least one PC client;
- A description file (*package.ini*) which comprises a description of all installation files, and further including a command for controlling an unattended setup procedure;
- an executable file *(pushservice.exe)* existing as shared resources and receiving the format of a NT service, said executable file (*pushservice.exe*) being installed as a NT service by the NT Service Control Manager and receiving, as an option to the command line, a reference to said description file; said executable file causing, when started as a service, the execution of the local setup procedure within said at least one PC client.
